# EUROPEAN PATENT APPLICATION

(11) **EP 1 315 268 A1**
(43) Date of publication of application: **28.05.2003**
(21) Application number: 01128175.5
(22) Date of filing: 27.11.2001
(51) Int. Cl.: H02K 1/14

(54) **Stator structure with composite windings**

(71) Applicant: HSU, CHUN-PU, TAIPEI HSIEN; TAIWAN, R.O.C. (TW)
(72) Inventor: HSU, CHUN-PU, TAIPEI HSIEN; TAIWAN, R.O.C. (TW)
(74) Representative: Viering, Jentschura & Partner

(57) **Abstract**

A stator structure with composite windings is used for the motor or generator to provide high efficiency, low cogging torque and low cost and the winding thereof can be firmly attached to an insulating stage. The stator structure is composed of silicon steel plates formed by pressing and stacking. The stator structure is composed of separated stator teeth, stator, winding and insulating stage. The winding is formed by a spinning winding tool or a winding formation tool and then mounted on the insulating stage. The stator teeth are also mounted on the insulating stag, thus assembling a stator for motor or generator with high efficiency, low cogging torque and low cost.

## Description

### Field of the invention

The present invention relates to a stator structure, especially to a stator structure with composite windings, wherein the stator windings and winding groove are separate to the stator such that the motor or generator using the stator has high efficiency, low cogging torque and low cost.

### Background of the invention

The stator is required to have high efficiency and low cogging torque, and winding is crucial for stator to provide high operation efficiency. The stator winding should have high electrical loading and magnetic loading to achieve high operation efficiency. To achieve high electrical loading, the stator winding should have large radius and turn number to reduce copper resistance and provide high electrical loading, i.e., a large electrical current flowing in the winding. Moreover, a winding with large coil radius can reduce electrical resistance and the power dissipation according to the formula, W=I²R, wherein W is dissipated power, I is motor current and R is coil copper resistance. However, the plastic material and the winding groove are tended to have distortion due to excessive tension and torque for wrapping a thick winding. The structural strength and precision of the winding groove are affected.

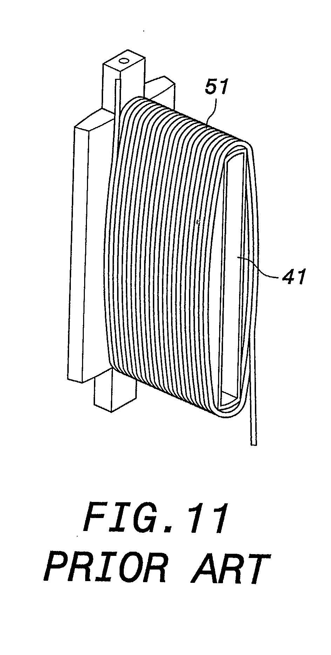

With reference to Fig. 11, to wrap a thick winding 51 on an insulting stage 41, the winding apparatus should have enough tension and torque, otherwise the winding 51 cannot be firmly attached on the insulting stage 41 and the occupying ratio of the stator winding is low. For example, the prior art US PAT. No. 4,712,035 has above problem.

### Summary of the invention

In one aspect of the present invention, the windings thereof are separately formed by a spinning winding tool or a winding formation tool and then mounted on the insulating stage. Therefore, the windings can be firmly attached on the insulating stage to increase occupying ratio of the stator winding.

In another aspect of the present invention, the stator teeth are separated; the tooth surface has smaller separation with adjacent tooth surface. The mouth of the winding groove is also reduced. The cogging torque of rotor is also reduced.

In still another aspect of the present invention, the stator ring and the stator teeth are decomposed to separate components formed by pressing and stacking magnetic silicon steel. The present invention does not require larger pressing tool and the waste of the magnetic silicon steel can be prevented.

The various objects and advantages of the present invention will be more readily understood from the following detailed description when read in conjunction with the appended drawing, in which:

### Brief description of drawing:

Figs. 1A-1C show that the windings of the present invention are formed by a spinning winding tool;
Figs. 2A-2B show that the windings of the present invention are formed by a winding formation tool;
Figs. 3A-3C show the assembling of the stator teeth, the insulating stage and the windings;
Figs. 4A-4B shows a plurality of stator ring, stator teeth, insulating stages the windings in an inner-rotator type stator structure;
Figs. 4C-4D shows a plurality of stator ring, stator teeth, insulating stages the windings in an outer-rotator type stator structure;
Fig. 5A shows a sectional views of inner-rotator type stator of the first preferred embodiment of the present invention;
Fig. 5B shows a sectional views of outer-rotator type stator of the first preferred embodiment of the present invention;
Fig. 6A shows a sectional views of inner-rotator type stator of the second preferred embodiment of the present invention;
Fig. 6B shows a sectional views of outer-rotator type stator of the second preferred embodiment of the present invention;
Fig. 7A shows a sectional views of inner-rotator type stator of the third preferred embodiment of the present invention;
Fig. 7B shows a sectional views of outer-rotator type stator of the third preferred embodiment of the present invention;
Fig. 8 shows the arrangement of the stator teeth in the pressing mold;
Fig. 9 shows the arrangement of the stator rings in the pressing mold;

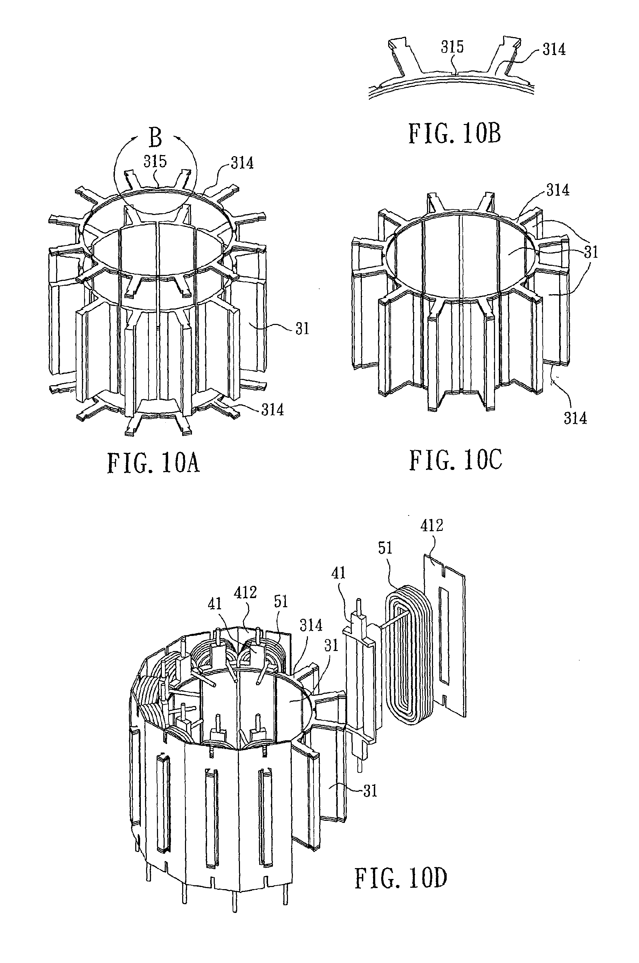

Figs. 10A-10D show the fourth preferred embodiment of the present invention;
Fig. 11 shows the perspective view of the prior art windings.

### Detailed description of the invention

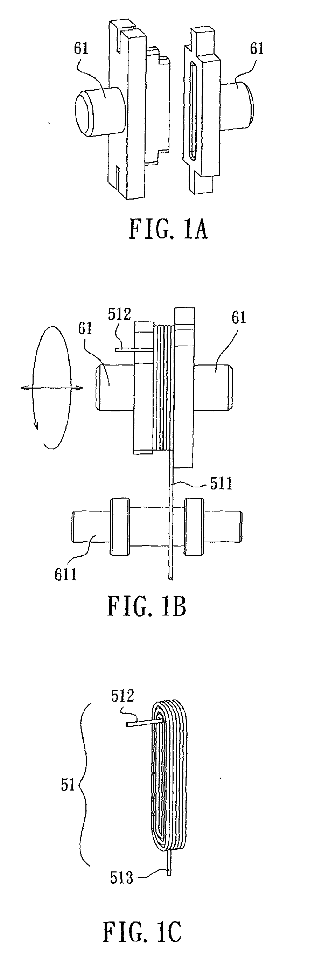

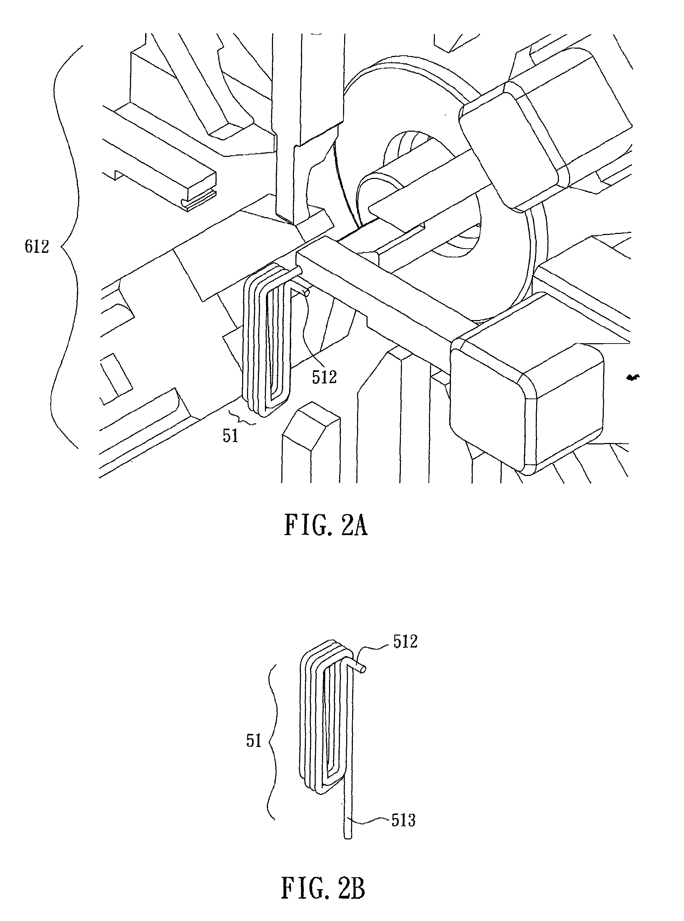

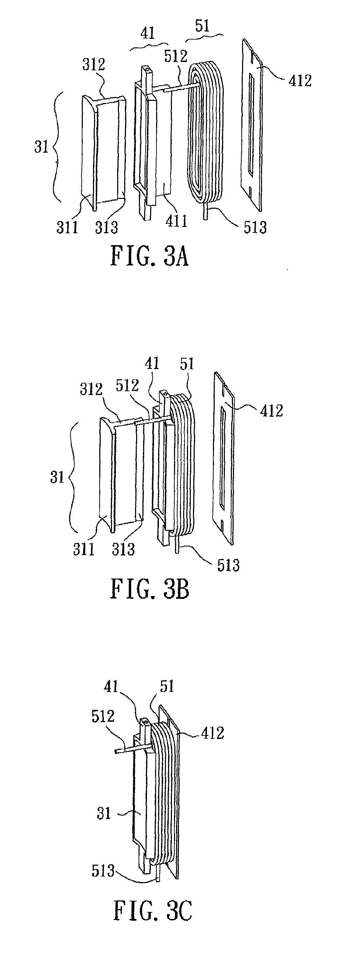

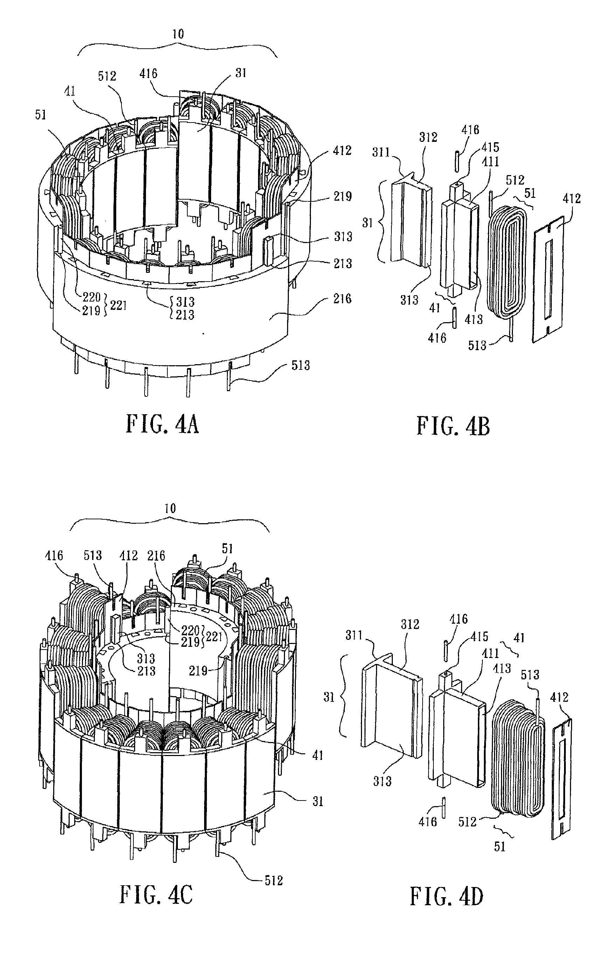

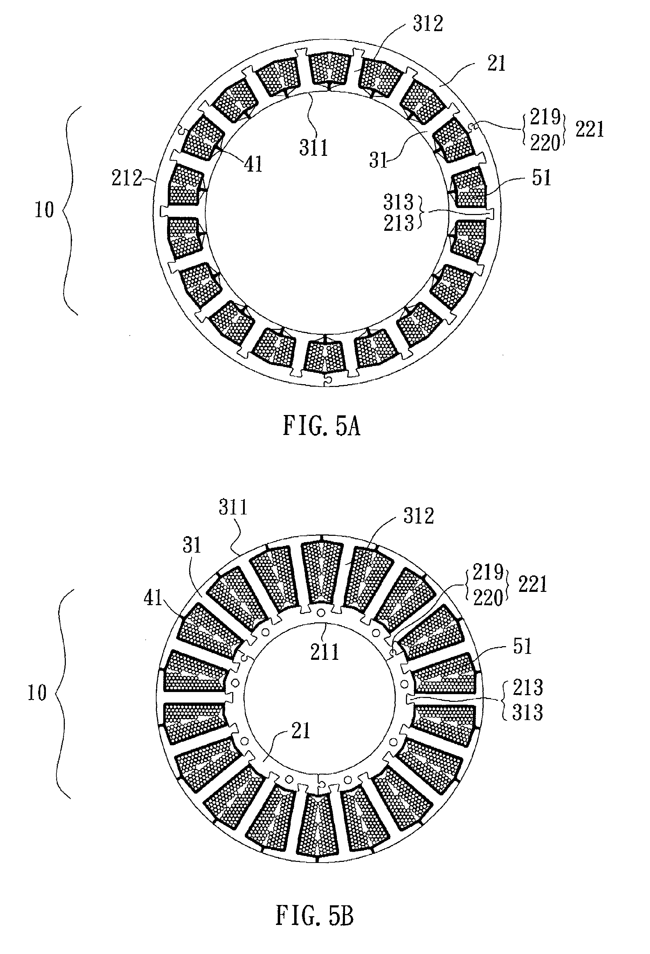

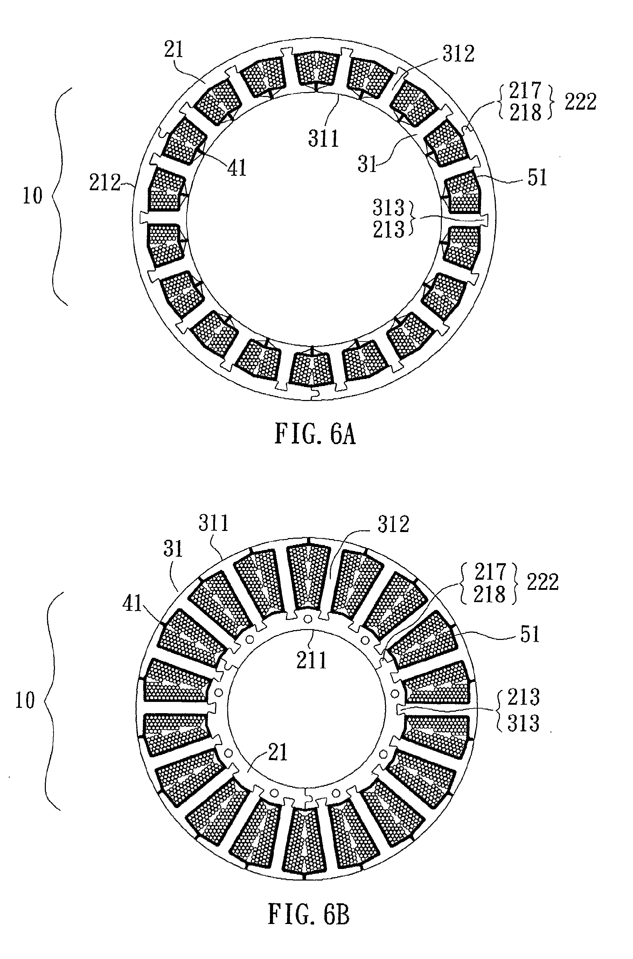

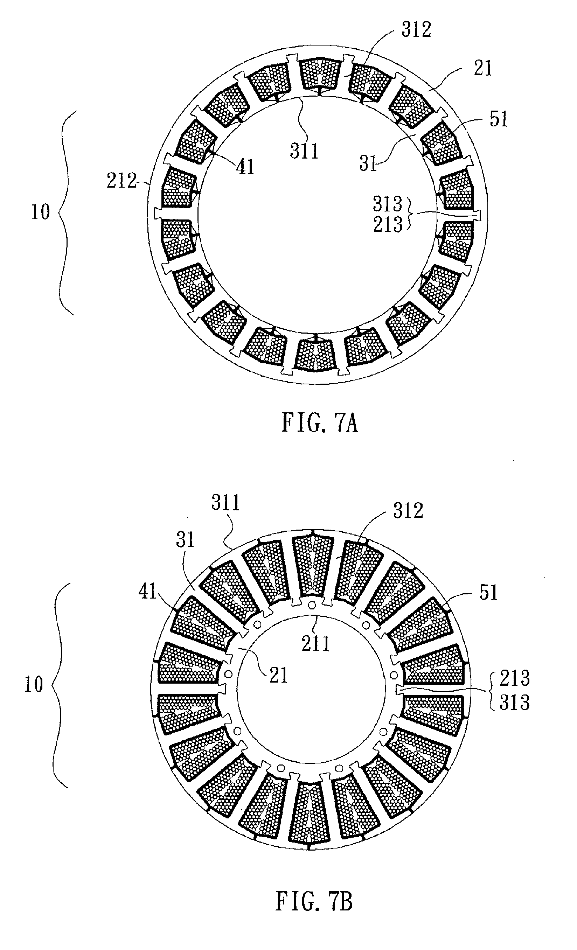

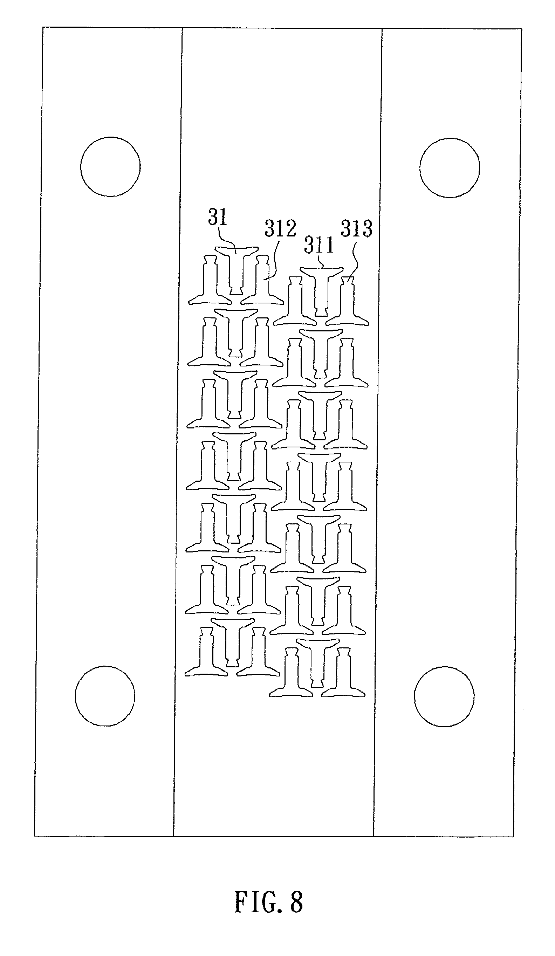

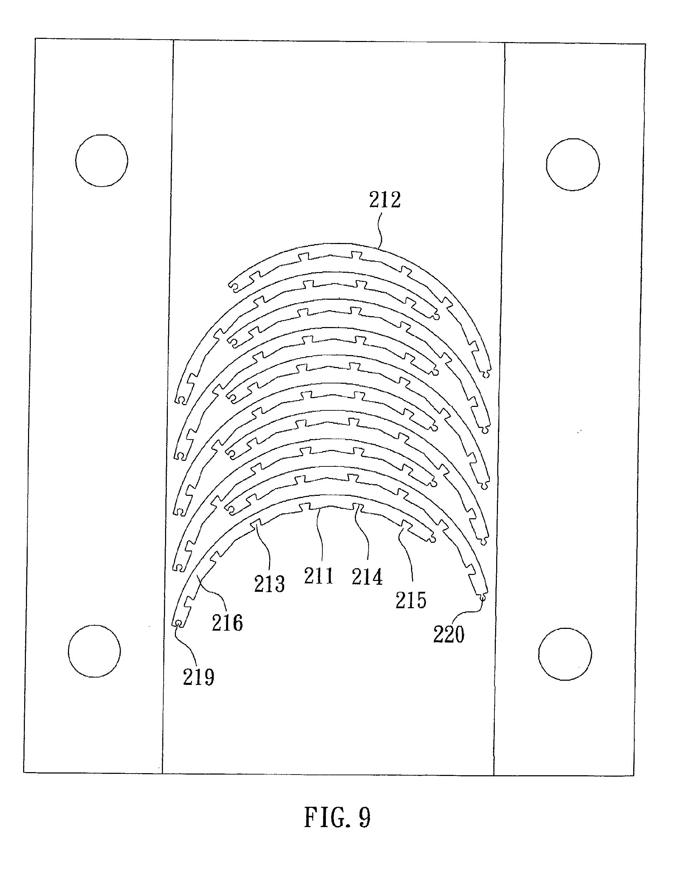

With reference now to Figs. 1 to 9, the composite stator structure 10 according to the present invention comprises a stator ring 21 divided into a plurality of equal units 216 made of magnetic silicon steel and formed by pressing and stacking. Each unit 216 has a concave end 217 (219) on one end thereof and a convex end 218 (220) on another end thereof. The concave end 217 has shape corresponding to that of the convex end 218 such that adjacent equal units 216 can be assembled through the embedding of the concave end 217 and the convex end 218. Therefore, a paneled structure 221 assembled by one concave end 219 and one convex end 220 or an embedded structure 222 assembled by one concave end 217 and one convex end 218 can be assembled to form a stator ring 21. One side of the stator ring 21 has a plurality of embedding grooves 213 with equal pitch and with number corresponding to the stator tooth number. The composite stator structure 10 according to the present invention further comprises a plurality of teeth 31 each having an arc-shaped tooth surface 311 and made of magnetic silicon steel by pressing and stacking. Each of the teeth 31 has a tooth flank 312 with a tooth tail 313 extending outward and corresponding to the embedding grooves 213 and embedded or paneled to the embedding grooves 213. The composite stator structure 10 according to the present invention further comprises a plurality of insulating stages 41 with T-shape and made of insulating material. The insulating stage 41 has a vertical post 411 on which a winding 51 is mounted. The vertical post 411 has a hollow portion 413 corresponding to the tooth flank 312 of the tooth 31 and the tooth flank 312 of the tooth 31 passes through and can be mounted on or detached from the hollow portion 413. The insulating stage 41 further has insulating plates 412 with guiding holes 415 used to assemble guiding needles 416. The composite stator structure 10 according to the present invention further comprises a plurality of windings 51 made of lacquered copper wires composed of conductive coil 511. The winding 51 has a head end 512 on one end thereof and a tail end 513 on another end thereof. Moreover, the lacquered copper wires are wrapped by a spinning winding tool 61, a coil-guiding tool 611 or a winding formation tool 612. The winding 51 has a hollow center and the vertical posts 411 are embedded into the hollow center.

In the present invention, the stator is referred to the outer stator of motor or electric generator; the stator ring 21 is referred to the inner ring of the stator. The inner ring 211 has a plurality of embedding grooves 213 concave to the outer ring 212 and arranged with a fixed pitch.

In the present invention, the stator is referred to the inner stator of motor or electric generator; the stator ring 21 is referred to the inner ring of the stator. The outer ring 212 has a plurality of embedding grooves 213 concave to the inner ring 211 and arranged with a fixed pitch.

The stator ring 21 is divided into a plurality of equal units 216; each unit 216 has a concave end 219 on one end thereof and a convex end 220 on another end thereof. The concave end 219 has shape corresponding to that of the convex end 220 such that adjacent equal units 216 can be assembled through the embedding of the concave end 219 and the convex end 220. The width of the inner dent of the concave end 219 is larger than the mouth of the concave end 219 such that the paneled structure 221 assembled by one concave end 219 and one convex end 220 cannot be separated in lateral direction.

Alternatively, the stator ring 21 is divided into a plurality of equal units 216; each unit 216 has a concave end 217 on one end thereof and a convex end 218 on another end thereof. The concave end 217 has shape corresponding to that of the convex end 218 such that adjacent equal units 216 can be assembled through the embedding of the concave end 217 and the convex end 218. The width of the inner dent of the concave end 217 is smaller than or equal to the mouth of the concave end 217 such that the embedded structure 222 assembled by one concave end 217 and one convex end 218 cant be separated in lateral direction.

The stator ring 21 can be integrally annulus shape.

The winding 51 can be referred to the magnetic exciting winding of motor.

Alternatively, the winding 51 can be referred to the induced winding of generator.
Each the stator teeth 31 has closing ring 314 on topside and bottom side thereof and having connecting end 315, the closing rings 314 can be connected integrally by the connecting end 315, whereby a plurality of winding grooves, windings and insulating plates can be assembled on the stator teeth.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. A stator structure with composite windings, comprising
a stator ring divided into a plurality of equal units, each unit having a concave end on one end thereof and a convex end on another end thereof, the concave end having shape corresponding to that of the convex end such that adjacent equal units can be assembled through the assembling of the concave end and the convex end, the stator ring having a plurality of embedding grooves concavely formed on an inner side or an outer side thereof, the embedding grooves having equal pitch and number corresponding to a stator tooth number;
a plurality of stator teeth with arc-shaped tooth surface, each of the teeth having a tooth flank with a tooth tail, the tooth tail having shape corresponding to that of the embedding groove such that the tooth tail can be firmly embedded into the embedding groove;
a plurality of T-shaped insulating stages made of insulating material and having vertical post on which a winding is mounted; the vertical post having a hollow portion corresponding to the tooth flank of the tooth and the tooth flank of the tooth passing through and mounted on or detached from the hollow portion;
a plurality of windings made of lacquered copper wires composed of conductive coil wrapped by a winding tool or a winding formation tool, the winding having a hollow center and the vertical posts embedded into the hollow center.

2. The stator structure as in claim 1, wherein the stator is outer stator of motor or electric generator; the stator ring is an outer ring of the stator; an inner end of the outer ring has a plurality of embedding grooves with number corresponding to the tooth number of the stator and concave toward an outer end of the outer ring.

3. The stator structure as in claim 1, wherein the stator is inner stator of motor or electric generator; the stator ring is inner ring of the stator; an outer end of the inner ring has a plurality of embedding grooves with number corresponding to the tooth number of the stator and concave toward an inner end of the inner ring.

4. The stator structure as in claim 1, wherein each stator is separated into a plurality of equal units; each unit having a concave end on one end thereof and a convex end on another end thereof, the width of the inner dent of the concave end being larger than the mouth of the concave end such that the structure assembled by one concave end and one convex end cannot be separated in lateral direction.

5. The stator structure as in claim 1, wherein each stator is separated into a plurality of equal units; each unit having a concave end on one end thereof and a convex end on another end thereof, the width of the inner dent of the concave end being smaller than or equal to the mouth of the concave end such that the structure assembled by one concave end and one convex end can be separated in lateral direction.

6. The stator structure as in claim 1, wherein the stator ring is integrally annulus shape.

7. The stator structure as in claim 1, wherein each the stator teeth has closing ring on topside and bottom side thereof and having connecting end, the closing rings can be connected integrally by the connecting end, whereby a plurality of winding grooves, windings and insulating plates can be assembled on the stator teeth.

8. The stator structure as in claim 1, wherein the winding is the magnetic exciting winding of motor.

9. The stator structure as in claim 1, wherein the winding is the induced winding of generator.
